# EUROPEAN PATENT APPLICATION

(11) **EP 3 709 088 A1**
(43) Date of publication of application: **16.09.2020**
(21) Application number: 20159030.4
(22) Date of filing: 24.02.2020
(51) Int. Cl.: G03G 15/00, G06K 17/00, B41J 3/50, G06K 19/07

(54) **IMAGE FORMING APPARATUS AND IMAGE FORMING METHOD**

(30) Priority: 15.03.2019 JP 2019048817
(71) Applicant: Toshiba TEC Kabushiki Kaisha, Shinagawa-ku Tokyo 141-8562 (JP)
(72) Inventor: Takada, Setsuo, Tokyo, 141-8562 (JP)
(74) Representative: Hoffmann Eitle

(57) **Abstract**

An image forming apparatus includes an RFID tag reader, an image forming unit, and a processor. The RFID tag reader is configured to read information from an RFID tag on a sheet conveyed along a conveyance path. The image forming unit includes a developer carrier. The processor is configured to determine, based on information read from the RFID tag on the sheet, whether information written to the RFID is correct. The processor is configured to cause the sheet to be conveyed to the image forming unit, a developer image already formed on the developer carrier to be removed without printing of the developer image on the sheet, and then print an alternative toner image indicative of a tag writing error on the sheet using the developer carrier.

## Description

### CROSS-REFERENCE TO RELATED APPLICATION

This application is based upon and claims the benefit of priority from Japanese Patent Application No. 2019-048817, filed March 15, 2019, the entire contents of which are incorporated herein by reference.

### FIELD

Exemplary embodiments described herein relate to an image forming apparatus and an image forming method.

### BACKGROUND

There is an image forming apparatus that writes information to a radio frequency identifier (RFID) tag attached to a sheet and also prints images on the sheet. Such an image forming apparatus can also read information that has been written to the RFID tag to determine whether writing of information to the RFID tag has been properly performed. If the RFID tag is not properly written with information, printing of an image indicating a writing error can be performed on the sheet.

However, if images are being continuously formed on a plurality of sheets or on both sides of a sheet, the image forming apparatus typically performs processing for forming different images in rapid succession. That is a process for forming an image different from the image to be used for indicating an error in tag writing may have already been started before the error in tag writing has been detected. For this reason, if the information read from the RFID tag is not normal/correct, the image forming apparatus may not be able to appropriately form the image indicating the error in tag writing.

### SUMMARY OF THE INVENTION

One of the objects of the present invention is to improve prior art techniques and overcome at least some of the prior art problems as for instance above illustrated.

According to a first aspect of the invention, it is provided an image forming apparatus, comprising an image forming unit configured to print images on sheets on a conveyance path, the image forming unit including a developer carrier on which developer images corresponding to images to be printed on a sheet are formed before printing on the sheet; an RFID tag reader configured to read information from an RFID tag on the sheet conveyed along the conveyance path; and a processor configured to: determine, based on information read by the RFID tag reader, whether information written to the RFID tag is correct, and when the information written to the RFID tag is not correct, cause the sheet to be conveyed to the image forming unit, a developer image already formed on the developer carrier to be removed without printing of the developer image on the sheet, and then print an alternative image indicative of a tag writing error on the sheet using the developer carrier.

Optionally, in the image forming apparatus according to the first aspect of the invention, the processor is further configured to cause the sheet to be conveyed to the image forming unit and the developer image already formed on the developer carrier to be transferred to the sheet if the information written to the RFID tag is correct.

Optionally, in the image forming apparatus according to the first aspect of the invention, the RFID tag reader is downstream of the image forming unit along the conveyance path.

Optionally, in the image forming apparatus according to the first aspect of the invention, the RFID tag reader is upstream of the image forming unit along the sheet conveyance path.

Optionally, the image forming apparatus according to the first aspect of the invention further comprises an RFID tag writer configured to write information to the RFID tag on the sheet.

Optionally, in the image forming apparatus according to the first aspect of the invention, the RFID tag writer is downstream of the image forming unit along the conveyance path.

Optionally, in the image forming apparatus according to the first aspect of the invention, the RFID tag writer is upstream of the image forming unit along conveyance path.

Optionally, in the image forming apparatus according to the first aspect of the invention, the processor is configured to compare information written to the RFID tag by the RFID tag writer to information read from the RFID tag by the RFID tag reader to determine whether the information written to the RFID tag is correct.

Optionally, in the image forming apparatus according to the first aspect of the invention, the processor is further configured to when the information written to the RFID tag is not correct, cause an RFID tag on a subsequent sheet to be written with information corresponding to that intended for the RFID tag that was not written correctly.

Optionally, in the image forming apparatus according to the first aspect of the invention, the image forming unit comprises a plurality of developer carriers arranged in series along the conveyance path, and the alternative image is printed using the most downstream one of the developer carriers arranged in series.

Optionally, in the image forming apparatus according to the first aspect of the invention, the developer carrier is a photoconductive drum.

According to a second aspect of the invention, it is provided an image forming method, comprising reading, with an RFID tag reader, an RFID tag on a sheet conveyed along a conveyance path; determining, based on information read by the RFID tag reader, whether information written to the RFID tag is correct; and when the information written to the RFID tag is incorrect, causing the sheet to be conveyed to an image forming unit, a developer image already formed on a developer carrier of the image forming unit to be removed, and then print an alternative image indicative of a tag writing error on the sheet using the developer carrier.

Optionally, the image forming method according to the second aspect of the invention further comprises causing the sheet to be conveyed to the image forming unit and the developer image already formed on the developer carrier to be transferred to the sheet if the information written to the RFID tag is correct.

Optionally, in the image forming method according to the second aspect of the invention, the RFID tag reader is downstream of the image forming unit along the conveyance path.

Optionally, in the image forming method according to the second aspect of the invention, the RFID tag reader is upstream of the image forming unit along the sheet conveyance path.

Optionally, the image forming method according to the second aspect of the invention further comprises writing information to the RFID tag on the sheet using an RFID tag writer.

Optionally, the image forming method according to the second aspect of the invention further comprises comparing information that has been written to the RFID tag with the information read by the RFID tag reader from the RFID tag to determine whether the information written to the RFID tag is correct.

Optionally, the image forming method according to the second aspect of the invention further comprises when the information written to the RFID tag is not correct, causing an RFID tag on a subsequent sheet to be written with information corresponding to that intended for the RFID tag that was not written correctly.

Optionally, in the image forming method according to the second aspect of the invention, the image forming unit comprises a plurality of developer carriers arranged in series along the conveyance path, and the alternative image is printed using the most downstream one of the developer carriers arranged in series.

Optionally, in the image forming method according to the second aspect of the invention, the developer carrier is a photoconductive drum.

### DESCRIPTION OF THE DRAWINGS

FIG. 1 illustrates an external view of an image forming apparatus according to a first embodiment.
FIG. 2 is a block diagram illustrating a system configuration of an image formation system according to the first embodiment.
FIG. 3 is a block diagram illustrating a hardware configuration of the image forming apparatus according to the first embodiment.
FIG. 4 is a block diagram illustrating a hardware configuration of a write information server according to the first embodiment.
FIG. 5 depicts an internal configuration of the image forming apparatus according to the first embodiment.
FIG. 6 depicts a conveyance path of a sheet when information written on an RFID tag according to the first embodiment is normal.
FIG. 7 depicts a conveyance path of a sheet when information written to the RFID tag according to the first embodiment is not normal.
FIG. 8 is a flowchart illustrating a flow of processing of information written to the RFID tag according to the first embodiment.
FIG. 9 depicts an internal configuration of an image forming apparatus according to a second embodiment.

### DETAILED DESCRIPTION

An example embodiment provides an image forming apparatus and an image forming method which can form an image indicating that an RFID tag is abnormal or not correctly written even tag sheets are being processed quickly or being printed with images on both sides of the tag sheet.

In general, according to an embodiment, an image forming apparatus includes an RFID tag reader, an image forming unit, and a processor. The RFID tag reader is configured to read an RFID tag on a sheet conveyed along a conveyance path. The image forming unit including a developer carrier. The processor is configured to determine, based on information read by the RFID tag reader from the RFID tag, whether information written to the RFID is correct. The processor is configured to, when the writing has not been properly carried or the information is otherwise incorrect, cause the sheet to be conveyed to the image forming unit, a developer image already formed on the developer carrier to be removed, and then an alternative image indicating a tag writing error to be printed on the sheet.

An image forming apparatus and an image forming method according to certain example embodiment will be described with reference to the accompanying drawings.

### (First Embodiment)

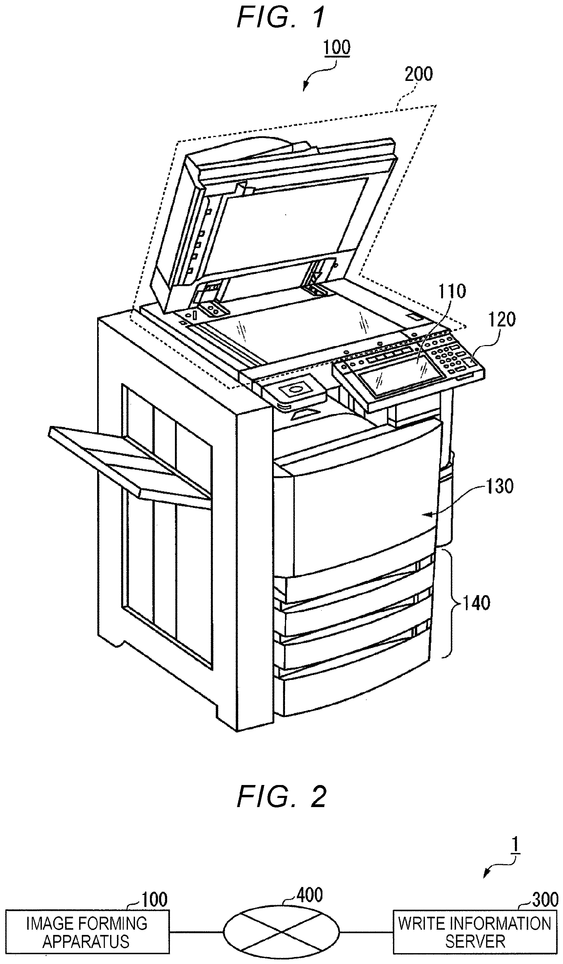

FIG. 1 illustrates an external view of an image forming apparatus 100 according to a first embodiment. The image forming apparatus 100 is, for example, a multifunction peripheral apparatus. The image forming apparatus 100 includes a display 110, a control panel 120, a printer unit 130, a sheet accommodation unit 140, and an image reading unit 200. The printer unit 130 of the image forming apparatus 100 may be an electrophotographic apparatus that prints images by fixing a toner image to a sheet or may be an ink jet type apparatus.

The image forming apparatus 100 forms an image on a sheet using a developer such as toner. The sheet is, for example, paper, a tag sheet, or a label sheet. The sheet may be a sheet to which one or more RFID tag is attached or coupled. In general, the sheet may be any medium or material on which the image forming apparatus 100 can form an image on a surface thereof. Regarding the sheet to which the RFID tag is attached or coupled, the RFID tag may be attached onto a surface of the sheet or the RFID tag may be embedded within the sheet.

The display 110 is an image display device such as a liquid crystal display or an organic electro luminescence (EL) display. The display 110 displays various kinds of information regarding the image forming apparatus 100.

The control panel 120 includes a plurality of buttons. The control panel 120 receives a user's operation. The control panel 120 outputs a signal according to an operation performed by the user to a control unit of the image forming apparatus 100. The display 110 and the control panel 120 may be configured as an integrated touch panel.

The printer unit 130 forms an image on a sheet on the basis of image information generated by the image reading unit 200 or image information received through a communication path. The printer unit 130 forms an image through, for example, the following processing. The printer unit 130 forms an electrostatic latent image on a photoreceptor drum on the basis of image information. The printer unit 130 forms a visible image by attaching a developer to the electrostatic latent image. A specific example of the developer is a toner. The printer unit 130 transfers the visible image onto a sheet. The printer unit 130 fixes the visible image onto the sheet by heating and pressing the sheet. The sheet having the image formed thereon may be a sheet accommodated in the sheet accommodation unit 140 or may be a sheet manually supplied.

The sheet accommodation unit 140 accommodates sheets used to form an image in the printer unit 130.

The image reading unit 200 reads image information to be read based on brightness and darkness of light. The image reading unit 200 records the read image information. The recorded image information may be transmitted to another information processing device through a network. The recorded image information may be formed on a sheet as an image by the printer unit 130.

FIG. 2 is a block diagram illustrating a system configuration of an image formation system 1 according to the first embodiment. The image formation system 1 is provided in a network 400. The image formation system 1 includes the image forming apparatus 100 and a write information server 300 which are communicatively connected to each other through the network 400. The network 400 is a broadband communication network such as the Internet. The network 400 may be a network using wireless communication or may be a network using wired communication. The network 400 may comprises a plurality of networks being combined or otherwise interconnected with each other.

The write information server 300 comprises an information processing device such as a server or a personal computer. The write information server 300 supplies write information to be written to an RFID tag attached to a sheet in response to a request sent from the image forming apparatus 100. The write information is information written to the RFID tag attached to the sheet. The write information is information such as a Japan Article Number (JAN) code or a serial number. The write information can be written in an electronic product code (EPC) area of the RFID tag through an antenna 154.

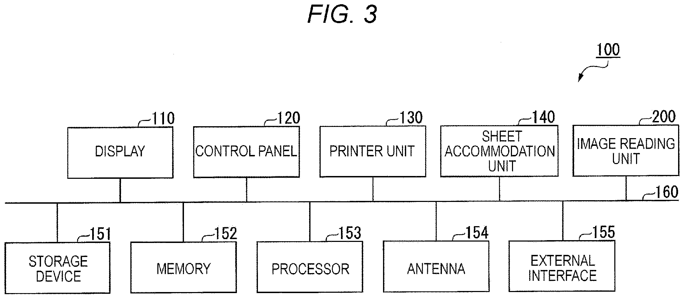

FIG. 3 is a block diagram illustrating a hardware configuration of the image forming apparatus 100 according to the first embodiment. The image forming apparatus 100 includes the display 110, the control panel 120, the printer unit 130, the sheet accommodation unit 140, a storage device 151, a memory 152, a processor 153, the antenna 154, an external interface 155, and the image reading unit 200. The display 110, the control panel 120, the printer unit 130, the sheet accommodation unit 140, and the image reading unit 200 are described above, and thus description thereof will be omitted. Hereinafter, the storage device 151, the memory 152, the processor 153, the antenna 154, and the external interface 155 will be described. The functional units are connected to each other so as to be capable of communicating data through a system bus 160.

The storage device 151 is, for example, a hard disk or a solid state drive (SSD), and stores various pieces of data. The various pieces of data are a printing job received from an external communication device or a software program for controlling operations of the functional units of the image forming apparatus 100. The printing job may include information indicating which write information is acquired from the write information server 300. The printing job may be a job related to both-side printing or may be a job related to printing of a plurality of sheets. The printing job may include image information related to an image printed on a sheet.

The memory 152 temporarily stores data used by the functional units included in the image forming apparatus 100. The memory 152 is, for example, a random access memory (RAM) . The memory 152 may store digital data generated by the image reading unit 200. The memory 152 may temporarily store a printing job in which printing is performed by the printer unit 130 and write information to be written on an RFID tag which is received from the write information server 300.

The processor 153 controls operations of the described functional units of the image forming apparatus 100. The processor 153 executes processing by loading a software program stored in the storage device 151 onto the memory 152 and executing a software program. Here, one example of specific processing of the processor 153 will be described. The processor 153 controls the printing of a sheet to which an RFID tag is attached (RFID tag sheet). The printing is controlled by the processor 153 on the basis of a printing job received through an external communication device or the control panel 120. When the processor 153 receives a printing job for a RFID tag sheet, the processor 153 acquires write information designated by the printing job and image information associated with the write information from the write information server 300. The image information associated with the write information is information related to an image formed on the sheet. The image information is not necessarily directly associated with the write information. In this case, the image information is preferably included in the printing job. The processor 153 controls the sheet accommodation unit 140. The sheet accommodation unit 140 supplies a RFID tag sheet (a sheet to which an RFID tag is attached) . The processor 153 controls the printer unit 130. The printer unit 130 prints image information acquired from the write information server 300 on a sheet. The processor 153 controls the antenna 154. The antenna 154 writes write information on an RFID tag attached to a supplied sheet. The antenna 154 reads the write information written to the RFID tag. The processor 153 determines whether or not write information acquired from the write information server 300 and information read from an RFID tag are consistent with each other. If the write information acquired from the write information server 300 and the information read from the RFID tag are consistent with each other, the processor 153 controls a conveying roller (not shown) so as to discharge a sheet. If the write information acquired from the write information server 300 and the information read from the RFID tag are not consistent with each other, the processor 153 operates to print an image indicating an error writing on a sheet. After an image indicating the error writing is printed in accordance with controlling of the conveying roller, a sheet is discharged.

The antenna 154 performs writing of information on an RFID tag attached to a sheet. In addition, the antenna 154 performs reading of information from the RFID tag attached to the sheet. The antenna 154 writes write information acquired from the write information server 300 on the RFID tag attached to the sheet by operating as an RFID tag writing device. The antenna 154 reads information from the RFID tag by operating as an RFID tag reading device. The antenna 154 is provided downstream of the printer unit 130. Since the antenna 154 is provided downstream of the printer unit 130, writing and reading are performed on an RFID tag after being heated by the printer unit 130. Therefore, by providing the antenna 154 downstream of the printer unit 130, for example, when the RFID tag fails due to heating by the printer unit 130, a failure can be detected. The antenna 154 is one form of an RFID tag reading unit and an RFID tag recording unit. The antenna 154 is configured to perform both writing and reading of information on an RFID tag, but is not limited thereto. For example, regarding the antenna 154, an antenna for writing and an antenna for reading may be provided as different antennas.

The external interface 155 transmits and receives data to and from another device. Here, another device is an information processing device such as a personal computer, a tablet computer, or a smart device, or an information processing device such as the write information server 300. The external interface 155 operates as an input interface and receives data or an instruction transmitted from the other device. The instruction transmitted from the other device is a printing job or the like. The data transmitted from the other device is write information, image information associated with the write information, or the like. In addition, the external interface 155 operates as an output interface and transmits data to the other device.

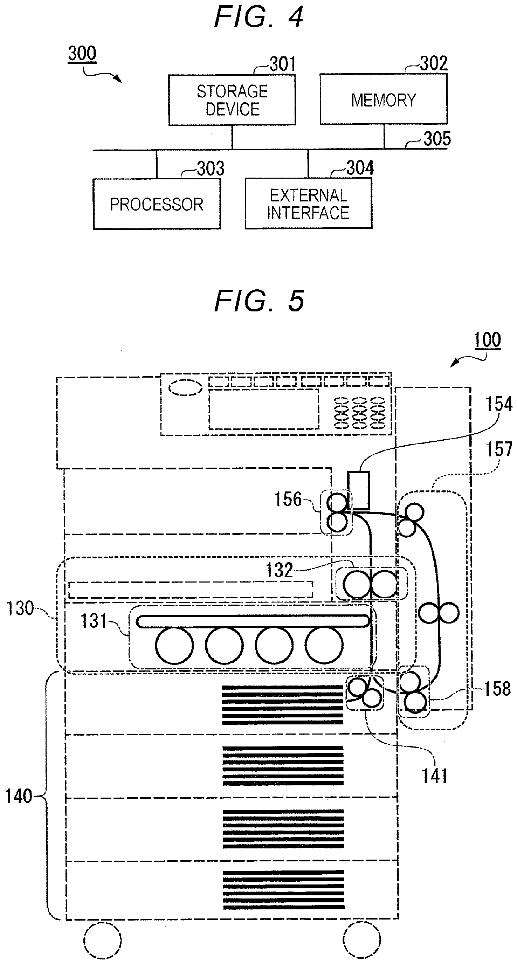

FIG. 4 is a block diagram illustrating a hardware configuration of the write information server 300 according to the first embodiment. The write information server 300 includes a storage device 301, a memory 302, a processor 303, and an external interface 304. The functional units are communicably connected to each other so as to be capable of communicating data through a system bus 305.

The storage device 301 is, for example, a hard disk or an SSD, and stores various pieces of data. The various pieces of data can be write information to be written on an RFID tag or image information associated with the write information. The various pieces of data can also include a software program for controlling operations of the functional units of the write information server 300.

The memory 302 temporarily stores data used by the functional units of the write information server 300. The memory 302 is, for example, a RAM.

The processor 303 controls operations of the functional units of the write information server 300. The processor 303 executes processing by loading a software program stored in the storage device 301 onto the memory 302 and executing the software program. Here, one possible example of specific processing of the processor 303 will be described. The processor 303 receives requests for write information and image information associated with the write information from the image forming apparatus 100 through the external interface 304. The processor 303 transmits the requested write information and the image information associated with the write information to the image forming apparatus 100.

The external interface 304 transmits and receives data to and from other devices. In this context, "other device" can be a device such as the image forming apparatus 100. The external interface 304 operates as an input interface and receives data and/or an instruction transmitted from the other device(s). The instruction transmitted from the other device can be a request for write information, or the like. In addition, the external interface 304 operates as an output interface and transmits data to the other device(s).

FIG. 5 is a diagram illustrating a specific example of an internal configuration of the image forming apparatus 100 according to the first embodiment. The image forming apparatus 100 includes the printer unit 130, the sheet accommodation unit 140, the antenna 154, a sheet discharging unit 156, and a sheet reversing path 157. The printer unit 130 includes an image forming unit 131 and a fixing unit 132. The sheet accommodation unit 140 includes a sheet supply unit 141. The sheet reversing path 157 includes a registration unit 158. The printer unit 130, the sheet accommodation unit 140, and the antenna 154 are, in general, as described above, and thus additional description thereof will be omitted. Various aspects of the image forming unit 131, the fixing unit 132, the sheet supply unit 141, the sheet discharging unit 156, the sheet reversing path 157, and the registration unit 158 will be described.

In this example, the image forming unit 131 includes a predetermined toner set. For example, the image forming unit includes a yellow toner, a cyan toner, a magenta toner, and a black toner from an upstream side (the left side in the drawing). In addition, the predetermined toner set may include a special toner such as a decolorable toner. The image forming unit 131 includes a developing unit, a photoreceptor drum, and a charging unit for each toner. The charging unit uniformly charges the photoreceptor layer of the photoreceptor drum. The photoreceptor drum can be irradiated with a laser beam to form an electrostatic latent image on the surface thereof. The developing unit performs development by supplying a toner to the electrostatic latent image. In addition, the image forming unit 131 includes a transfer belt. Images developed with the different toners are sequentially transferred to the transfer belt so as to overlap each other as necessary. The overlapping toner images are then transferred to a sheet using a transfer roller. Although an image forming method of an intermediate transfer system is described for the present embodiment, in other examples, a direct transfer system or other transfer systems may be used.

The fixing unit 132 includes a heating roller and a pressing roller. The heating roller applies heat to a sheet from one surface side of the sheet. The pressing roller applies pressure to the sheet from the other surface side of the sheet. The fixing unit 132 fixes the toner to the sheet by applying heat and pressure to the sheet.

The sheet supply unit 141 supplies sheets accommodated in the sheet accommodation unit 140. The sheet supply unit 141 comprises, for example, a sheet supply roller. The sheet discharging unit 156 discharges sheets conveyed through the inside of the image forming apparatus 100. The sheet discharging unit 156 comprises, for example, a sheet discharge roller.

The sheet reversing path 157 is a path for reversing a sheet in order to form an image on a surface on a side opposite to a surface of the sheet on which an image is formed (hereinafter, referred to as a "rear surface"). The sheet reversing path 157 is a path for reversing and conveying a sheet conveyed to the sheet discharging unit 156 by switchback.

The registration unit 158 is provided in the sheet reversing path 157. In the first embodiment, description assumes that the registration unit 158 is a registration roller provided on the most downstream side of the sheet reversing path 157. The registration unit 158 temporarily stops the conveyance of a sheet. When stopping the conveyance of the sheet, the registration unit 158 corrects an inclination of the sheet in a direction perpendicular to a conveyance direction. Note, in general, the location of the registration unit 158 is not limited to the most downstream side of the sheet reversing path 157. The registration unit 158 may be provided at any location as long as the registration unit is provided along the path between the sheet discharging unit 156 and the sheet reversing path 157.

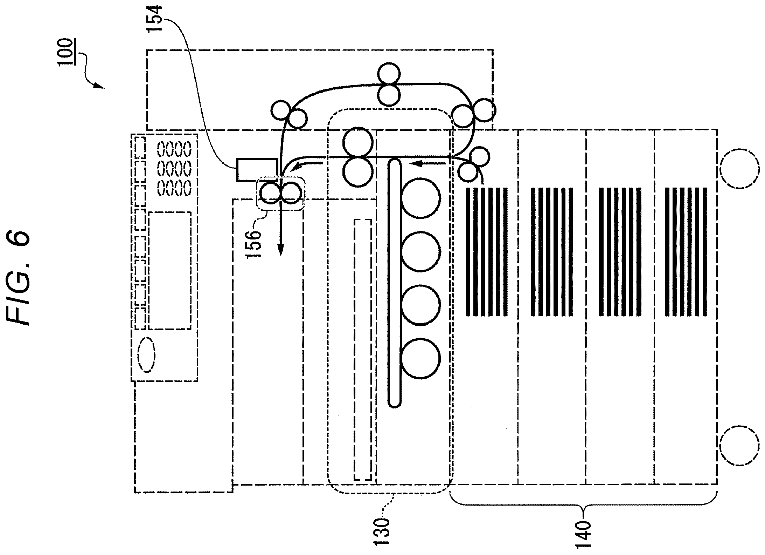

FIG. 6 is a diagram illustrating a specific example of a conveyance path of a sheet when information written on an RFID tag according to the first embodiment is normal. First, a RFID tag sheet is supplied from the sheet accommodation unit 140. The supplied sheet is conveyed to the printer unit 130. An image is formed on the sheet by the printer unit 130. The sheet having an image formed thereon is conveyed to the antenna 154. Write information is written to the RFID tag of the sheet conveyed to the antenna 154 using the antenna 154. The antenna 154 then reads information from the RFID tag. If the read information and the written information are consistent with each other, the processor 153 determines that the information of the RFID tag is normal. The sheet is conveyed to the sheet discharging unit 156 and discharged from the image forming apparatus 100.

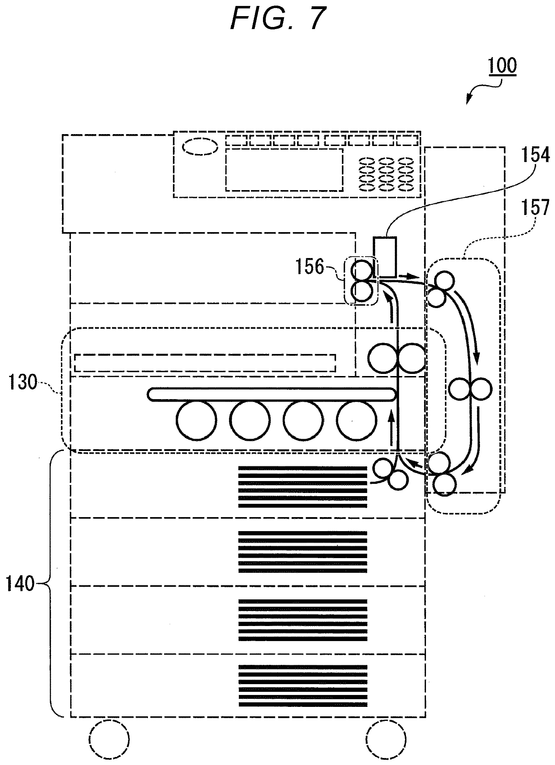

FIG. 7 is a diagram illustrating a specific example of a conveyance path of a sheet when information written on an RFID tag according to the first embodiment is not normal. First, a RFID tag sheet is supplied from the sheet accommodation unit 140. The supplied sheet is conveyed to the printer unit 130. An image is formed on the sheet by the printer unit 130. The sheet having an image formed thereon is conveyed to the antenna 154. Write information is written using the antenna 154 to the RFID tag of the sheet conveyed to the antenna 154. The antenna 154 reads the information just written to the RFID tag. If the read information and the written information are inconsistent with each other, the processor 153 determines that the information written to the RFID tag is abnormal. When it is determined that the information from the RFID tag is not normal, the sheet is switched back from the sheet discharging unit 156 and conveyed to the sheet reversing path 157. The sheet conveyed to the sheet reversing path 157 is temporarily stopped by the registration unit 158 (see FIG. 5). When it is determined that the information written to the RFID tag is not normal, the printer unit 130 removes a developer for forming an image on the rear surface of the conveyed sheet or a sheet to be conveyed next from a developer carrier (e.g., a drum). The printer unit 130 performs development so that an image indicating an error in writing to the RFID tag (hereinafter, referred to as a "void image") will be formed on at least one drum. The void image includes a indicative mark such as "×" and/or a sentence such as "a process of performing writing on a tag was not normally completed". The sheet which was temporarily stopped by the registration unit 158 is then conveyed to the printer unit 130 after a predetermined period of time elapses after the temporary stop. The predetermined period of time may be, for example, the period of time required until the printer unit 130 can form a void image. A void image is transferred to the sheet conveyed to the printer unit 130. The sheet to which the void image is transferred is discharged from the sheet discharging unit 156 (after fixing).

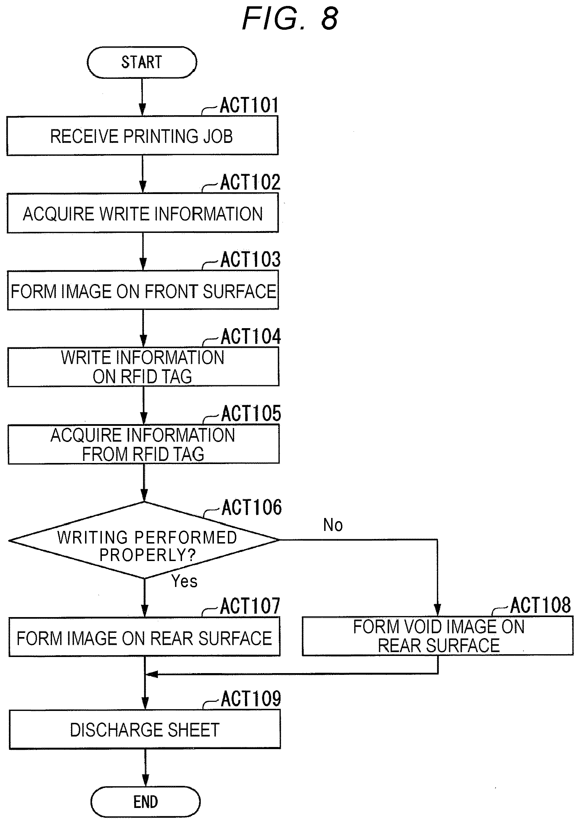

FIG. 8 is a flowchart showing a flow of processing of information written on an RFID tag according to the first embodiment. The present flowchart is executed if a printing job for performing both-side printing on a RFID tag sheet is received. The processor 153 of the image forming apparatus 100 receives a printing job (ACT 101). Specifically, an external information processing device such as a personal computer transmits a printing job related to both-side printing to the image forming apparatus 100 through a network. The processor 153 of the image forming apparatus 100 receives a printing job through the external interface 155.

The processor 153 acquires write information and image information associated with the write information (ACT 102) . Specifically, when the processor 153 receives the printing job, the processor requests the write information and the image information associated with the write information from the write information server 300 through the external interface 155. The write information server 300 transmits the requested write information and image information associated with the write information to the image forming apparatus 100.

The printer unit 130 forms an image on one surface (front surface) of the conveyed sheet (ACT 103). Specifically, the sheet to which the RFID tag is attached is supplied from the sheet accommodation unit 140 in accordance with the reception of the printing job. The printer unit 130 develops the image on the basis of the acquired image information. The printer unit 130 forms an image by fixing the image developed on the supplied sheet.

The antenna 154 writes the write information on the RFID tag (ACT 104) . Specifically, when the sheet having the image formed thereon is conveyed, the antenna 154 emits electromagnetic waves for writing write information. The RFID tag attached to the sheet receives the electromagnetic waves, and thus the write information is written in a storage area of the RFID tag. The antenna 154 reads information previously written to the RFID tag (ACT 105). Specifically, an interrogation signal. the electromagnetic waves used for reading the information from the RFID tag, is emitted. The RFID tag attached to the sheet receives the interrogation signal, and the information recorded in the storage area of the RFID tag is transmitted to the antenna 154. The antenna 154 outputs the information received from the RFID tag to the processor 153 as read information.

The processor 153 determines whether or not writing to the RFID tag has been properly performed (ACT 106). Specifically, the processor 153 determines whether the read information satisfies a predetermined condition related to the correctness of information. For example, if the write information acquired from the write information server 300 and the read information read from the RFID tag are consistent with each other, the processor 153 determines that the writing has been properly performed on the RFID tag. If the write information acquired from the write information server 300 and the read information read from the RFID tag are inconsistent, it is determined that the writing has not been properly performed on the RFID tag.

If the writing has been properly performed on the RFID tag (ACT 106: YES), the printer unit 130 forms an image on the rear surface of the sheet on the basis of the image information acquired from the write information server 300 (ACT 107). Specifically, the processor 153 performs control so that an image based on the image information acquired in accordance with the printing job received by the image forming apparatus 100 is formed on the other surface of the sheet on which an image is formed in ACT 103. The printer unit 130 forms an image on the rear surface of the sheet.

If a predetermined condition related to an RFID tag is not satisfied (ACT 106: NO), the printer unit 130 forms a void image on the rear surface of the sheet (ACT 108) . Specifically, the processor 153 controls the printer unit 130 so that a developer to be used to form an image on the rear surface of the sheet is removed from the developer carrier. The processor 153 controls the printer unit 130 so that a void image is formed. The printer unit 130 forms a void image on the rear surface of the sheet. The image forming apparatus 100 discharges the sheet (ACT 109).

In the above-described embodiment, a case where both-side printing is performed is described, but the embodiment is not limited to a case where both-side printing is performed. For example, the image forming apparatus 100 may be configured such that a void image is formed when single-side printing of a plurality of sheets is performed. Specifically, if the writing on an RFID tag has not been properly performed, the processor 153 causes a sheet from the sheet discharging unit 156 to be conveyed along the sheet reversing path 157. Next, the sheet conveyed to the sheet reversing path 157 is temporarily stopped by the registration unit 158. The printer unit 130 removes a developer to be used to form an image on the next sheet from the developer carrier. The processor 153 controls the printer unit 130 so that a void image is formed. The printer unit 130 forms a void image on the rear surface of the sheet conveyed from the sheet reversing path 157. The image forming apparatus 100 discharges the sheet.

The antenna 154 of the image forming apparatus 100 configured in this manner reads information written on an RFID tag attached to a conveyed sheet. The printer unit 130 of the image forming apparatus 100 forms at least one of an image designated by the received printing job and an image indicating a writing error on a sheet. If the read information satisfies a predetermined condition related to correctness of information, the control unit (for example, the processor 153) of the image forming apparatus 100 controls the printer unit 130 so that an image designated by the printing job is formed on a sheet or a next sheet to be conveyed subsequently to the sheet. If the read information does not satisfy the predetermined condition related to correctness of information, the control unit controls the printer unit 130 so that a developer carried on the developer carrier is removed from the developer carrier in accordance with the printing job. Next, the control unit controls the printer unit 130 so that an image indicating the writing error is formed on a sheet.

For this reason, the image forming apparatus can print a void image on a sheet even when writing on an RFID tag is not successful at the time of performing both-side printing. With such a configuration, the image forming apparatus 100 can form an image indicating that writing on an RFID tag is not successful even when an image is continuously formed on a plurality of sheets or an image is formed on both sides of a sheet.

### (Second Embodiment)

Next, an image forming apparatus 100a in a second embodiment will be described. The image forming apparatus 100a in the second embodiment differs from the first embodiment in terms of a location at which antenna 154 is provided, but the other configurations are otherwise the same. Hereinafter, differences from the first embodiment will be described.

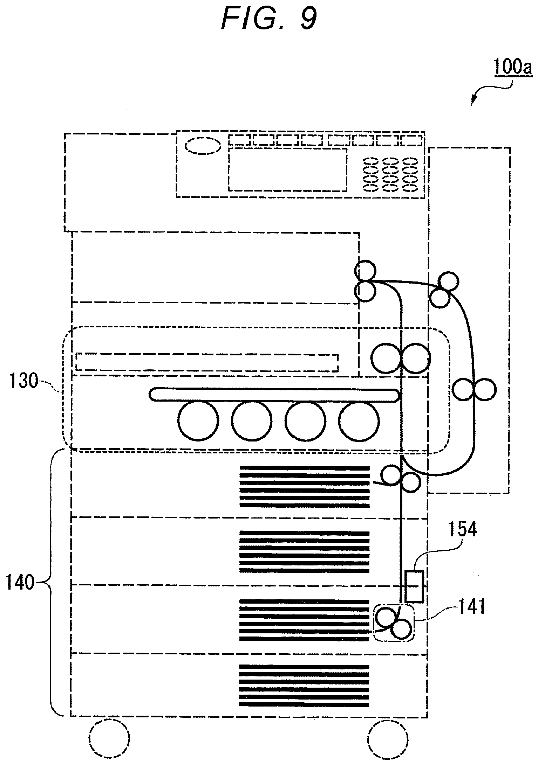

FIG. 9 is a diagram illustrating a specific example of an internal configuration of the image forming apparatus 100a according to the second embodiment. The image forming apparatus 100a differs from the first embodiment in that the antenna 154 is provided upstream of the printer unit 130, but the other configurations are the same. With such a configuration, if it is determined that information written to an RFID tag is not normal, the processor 153 controls the printer unit 130 so that a developer to be used to form an image on a front surface of a sheet is removed from a developer carrier. Next, the processor 153 controls the printer unit 130 so that a void image is formed. The printer unit 130 forms a void image on a front surface of a sheet. With such a configuration, the image forming apparatus 100a can print the void image without forming an image on the basis of image information when it is determined that the information written to the RFID tag is not normal. Further, if it is determined that the information written to the RFID tag is not normal, the image forming apparatus 100a may be configured to discharge a sheet without forming an image on a sheet. With such a configuration, the image forming apparatus 100a can save a developer used to form a void image.

### (Modification Example)

The image forming apparatus 100 may be configured such that a void image is formed on a rear end side of a sheet to be conveyed. With such a configuration, the image forming apparatus 100 can reduce a period of time for which a sheet is temporarily stopped by the registration unit 158 by a conveyance time for a front end portion of a sheet.

If information written on an RFID tag does not satisfy a predetermined condition related to the RFID tag, the image forming apparatus 100 may be configured such that an image is formed on a sheet to be conveyed next on the basis of a printing job executed during image formation on a sheet. Specifically, if the writing of information to the RFID tag has not been properly performed, the processor 153 records write information acquired from the write information server 300 and image information associated with the write information in the storage device 151 or the memory 152. Next, the processor 153 performs control so that a sheet having a void image formed thereon is discharged. The processor 153 controls the printer unit 130 so that an image is formed on a sheet to be conveyed next on the basis of the image information recorded in the storage device 151 or the memory 152. The processor 153 controls the antenna 154 so that write information recorded in the storage device 151 or the memory 152 is written to an RFID tag attached to a sheet having an image formed thereon. With such a configuration, the image forming apparatus 100 can form an image without receiving the printing job again even when the information written to the RFID tag does not satisfy a predetermined condition related to the RFID tag.

The image forming apparatus 100 may be configured so as to form a void image using a developer provided on the most downstream side of the printer unit 130. That is, in the image forming apparatus 100 of the present embodiment, a black developer is used. With such a configuration, the distance at which a developed image is conveyed to a position where the image is transferred to the sheet through a transfer belt is shorter than that when different developer is used, and thus the image forming apparatus 100 can reduce the period of time for which a sheet is delayed by the registration unit 158 by the conveyance time for a developer in the printer unit 130.

According to present disclosure, at least one embodiment provides an image forming apparatus and an image forming method which are capable of performing printing indicating that writing to an RFID tag was not successful even when images are being continuously printed on a plurality of sheets and/or both-side printing is performed on sheets, by incorporating and utilizing a printer unit 130, a processor 153, and an antenna 154.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions and their equivalents as defined by the appended claims. The accompanying claims and their equivalents are intended to cover such forms or modifications as would fall within the scope of the inventions.

## Claims

1. An image forming apparatus, comprising:
an image forming unit configured to print images on sheets on a conveyance path, the image forming unit including a developer carrier on which developer images corresponding to images to be printed on a sheet are formed before printing on the sheet;
an RFID tag reader configured to read information from an RFID tag on the sheet conveyed along the conveyance path; and
a processor configured to:
determine, based on information read by the RFID tag reader, whether information written to the RFID tag is correct, and
when the information written to the RFID tag is not correct, cause the sheet to be conveyed to the image forming unit, a developer image already formed on the developer carrier to be removed without printing of the developer image on the sheet, and then print an alternative image indicative of a tag writing error on the sheet using the developer carrier.

2. The image forming apparatus according to claim 1, wherein the processor is further configured to:
cause the sheet to be conveyed to the image forming unit and the developer image already formed on the developer carrier to be transferred to the sheet if the information written to the RFID tag is correct.

3. The image forming apparatus according to claim 1 or 2, further comprising:
an RFID tag writer configured to write information to the RFID tag on the sheet.

4. The image forming apparatus according to any of claims 1 to 3, wherein the RFID tag writer is downstream of the image forming unit along the conveyance path or wherein the RFID tag writer is upstream of the image forming unit along conveyance path.

5. The image forming apparatus according to claim 3 or 4, wherein the processor is configured to compare information written to the RFID tag by the RFID tag writer to information read from the RFID tag by the RFID tag reader to determine whether the information written to the RFID tag is correct.

6. The image forming apparatus according to any of claims 1 to 5, wherein the processor is further configured to:
when the information written to the RFID tag is not correct, cause an RFID tag on a subsequent sheet to be written with information corresponding to that intended for the RFID tag that was not written correctly.

7. The image forming apparatus according to any of claims 1 to 6, wherein the image forming unit comprises a plurality of developer carriers arranged in series along the conveyance path, and the alternative image is printed using the most downstream one of the developer carriers arranged in series.

8. The image forming apparatus according to any of claims 1 to 7, wherein the developer carrier is a photoconductive drum.

9. An image forming method, comprising:
reading, with an RFID tag reader, an RFID tag on a sheet conveyed along a conveyance path;
determining, based on information read by the RFID tag reader, whether information written to the RFID tag is correct; and
when the information written to the RFID tag is incorrect, causing the sheet to be conveyed to an image forming unit, a developer image already formed on a developer carrier of the image forming unit to be removed, and then print an alternative image indicative of a tag writing error on the sheet using the developer carrier.

10. The image forming method according to claim 9, further comprising:
causing the sheet to be conveyed to the image forming unit and the developer image already formed on the developer carrier to be transferred to the sheet if the information written to the RFID tag is correct.

11. The image forming method according to claim 9 or 10, wherein the RFID tag reader is downstream of the image forming unit along the conveyance path or wherein the RFID tag reader is upstream of the image forming unit along the sheet conveyance path.

12. The image forming method according to any of claims 9 to 11, further comprising:
writing information to the RFID tag on the sheet using an RFID tag writer.

13. The image forming method according to any of claims 9 to 12, further comprising:
comparing information that has been written to the RFID tag with the information read by the RFID tag reader from the RFID tag to determine whether the information written to the RFID tag is correct.

14. The image forming method according to any of claims 9 to 13, further comprising:
when the information written to the RFID tag is not correct, causing an RFID tag on a subsequent sheet to be written with information corresponding to that intended for the RFID tag that was not written correctly.

15. The image forming method according to any of claims 9 to 14, wherein the image forming unit comprises a plurality of developer carriers arranged in series along the conveyance path, and the alternative image is printed using the most downstream one of the developer carriers arranged in series.
